# EUROPEAN PATENT SPECIFICATION

(11) **EP 2 749 058 B1**
(45) Date of publication and mention of the grant of the patent: **23.10.2019**
(21) Application number: 11878912.2
(22) Date of filing: 27.12.2011
(51) Int. Cl.: H04W 16/14, H04W 36/22, H04W 36/14

(54) **METHOD AND RADIO NETWORK NODE FOR SMOOTH CHANGE OF BANDWIDTH USAGE FOR A RAT IN A RADIO COMMUNICATION SYSTEM.**
VERFAHREN UND FUNKNETZWERKKNOTEN ZUR SANFTEN ÄNDERUNG EINER BANDBREITENAUSNUTZUNG FÜR EIN RAT IN EINEM FUNKKOMMUNIKATIONSSYSTEM
PROCÉDÉ ET NOEUD DE RÉSEAU RADIO PERMETTANT UN CHANGEMENT SANS INTERRUPTION DE L'UTILISATION DE LA LARGEUR DE BANDE POUR UNE TECHNOLOGIE RAT DANS UN SYSTÈME DE RADIOCOMMUNICATION

(43) Date of publication of application: 02.07.2014
(73) Proprietor: Telefonaktiebolaget LM Ericsson (publ), 164 83 Stockholm (SE)
(72) Inventor: ERICSON, Mårten, 976 32 Luleå (SE); LINDOFF, Bengt, 237 35 Bjärred (SE)
(74) Representative: Brann AB
(86) International application number: PCT/SE2011/051593
(87) International publication number: WO 2013/100828

(56) References cited:
- EP-A1- 2 203 011
- WO-A1-2008/088254
- WO-A1-2010/091713
- WO-A1-2011/134099
- WO-A1-2011/146766
- WO-A2-2008/081309
- WO-A2-2010/093647
- SOROUSH GHAMARI ET AL: "An approach for automated spectrum refarming for multiple radio access technologies", TELECOM WORLD (ITU WT), 2011 TECHNICAL SYMPOSIUM AT ITU, IEEE, 24 October 2011 (2011-10-24), pages 187-192, XP032442811, ISBN: 978-1-4577-1148-0
- JEAN-PHILIPPE JAVAUDIN ET AL.: 'ON INTER-CELL INTERFERENCE IN OFDMA WIRELESS SYSTEMS.' 04 May 2005, FRANCE TELECOM, R&D DIVISION, FRANCE, XP002416208

## Description

Method and arrangement for smooth change of bandwidth usage for a RAT in a radio communication system.

### TECHNICAL FIELD

Embodiments herein relate to a radio network node and a method therein. In particular, embodiments relate to controlling usage of Radio Access Technology (RAT) and bandwidth in a radio communications system.

### BACKGROUND

Communication devices such as terminals are enabled to communicate wirelessly in a wireless communications system, sometimes also referred to as a cellular radio system or a cellular network. The communication may be performed e.g. between two user equipments, between a user equipment and a regular telephone and/or between a user equipment and a server via a Radio Access Network (RAN) and possibly one or more core networks, comprised within the wireless communications system. The RAN is configured to implement one or more RATs.

Terminals may also be referred to as User Equipments (UEs), mobile terminals, wireless terminals, mobile stations, mobile telephones, cellular telephones, or laptops with wireless capability, just to mention some further examples. The user equipments in the present context may be, for example, portable, pocket-storable, hand-held, computer-comprised, or vehicle-mounted mobile devices, enabled to communicate voice and/or data, via the RAN, with another entity.

The wireless communications system covers a geographical area which is divided into cell areas, wherein each cell area being served by a radio network node such as a Base Station (BS), e.g. a Radio Base Station (RBS), which sometimes may be referred to as e.g. eNB, eNodeB, NodeB, B node, or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells. Further, each base station may support one or several radio access and communication technologies. The base stations communicate over the radio interface operating on radio frequencies with the user equipments within range of the base stations.

In the context of this disclosure, the expression Downlink (DL) is used for the transmission path from the base station to the mobile station. The expression Uplink (UL) is used for the transmission path in the opposite direction i.e. from the mobile station to the base station.

In some RANs implementing one or more RATs, several base stations may be connected, e.g. by landlines or microwave, to a radio network controller, e.g. a Radio Network Controller (RNC) in Universal Mobile Telecommunications System (UMTS), and/or to each other. The radio network controller, also sometimes termed a Base Station Controller (BSC) e.g. in GSM, may supervise and coordinate various activities of the plural base stations connected thereto. GSM is an abbreviation for Global System for Mobile Communications (originally: Groupe Special Mobile).

In 3rd Generation Partnership Project (3GPP) Long Term Evolution (LTE), base stations, which may be referred to as eNodeBs or even eNBs, may be directly connected to one or more core networks.

UMTS is a third generation mobile communication system, which evolved from the GSM, and is intended to provide improved mobile communication services based on Wideband Code Division Multiple Access (WCDMA) access technology. UMTS Terrestrial Radio Access Network (UTRAN) is essentially a radio access network using wideband code division multiple access for user equipments. The 3GPP has undertaken to evolve further the UTRAN and GSM based radio access network technologies.

According to 3GPP/GERAN, a user equipment has a multi-slot class, which determines the maximum transfer rate in the uplink and downlink direction. GERAN is an abbreviation for GSM EDGE Radio Access Network. EDGE is further an abbreviation for Enhanced Data rates for GSM Evolution.

In radio communications systems, the radio spectrum is currently and will probably also in the future be a scarce resource. With the introduction of UMTS, new radio spectrum became available, primarily in the 2GHz band, for some operators to a very high price. Today there are around 10 different frequency bands possible for UMTS deployment, however not all frequency bands are available in every region.

In spite of the number of available frequency bands, the demand for more radio spectrum will very likely lead to so called re-farming (which will be explained below) of already used radio spectrum. This can be seen as a radio spectrum sharing on a very static basis. Most countries in the EU have announced firm plans and timelines for the re-farming of radio spectrum in 900/1800 MHz, the frequency bands typically used for 2G services, such as GSM. Fifteen markets have already implemented re-farming policies while eight others are expected to do so between the years 2011 and 2014. Today the operators have a license to use UMTS in the 900/1800 MHz frequency band, where GSM formerly was the only technique allowed. In some countries, operators have already started re-farming; for example in Finland UMTS is re-farming the 900MHz. Furthermore, the same re-farming demand will happen, or already is happening, with LTE. For LTE, the primary frequency band is the 2.6GHz frequency band in the EU, but elsewhere in the world other frequency bands are used as the primary frequency band. The standard for LTE allows a wide range of frequency bands from 700MHz to 2.6GHz, including for example the 1800MHz frequency band. Thus, it is likely that operators with LTE also will re-farm their existing spectrum such as the 1800MHz frequency band, sharing frequencies from both their GSM or HSPA frequencies.

By re-farming, when used herein, is meant that base stations for a first RAT is co-sited with base stations for a second RAT. For example, UMTS base stations may be co-sited with GSM base stations, or LTE base stations may be co-sited with UMTS base stations. In fact, it is even possible to share the same Radio Base Station (RBS), e.g. if bought from the same vendor, and share the same Power Amplifier (PA). An example of this is a base station which supports different RATs in one and the same radio base station, i.e. a radio base station supporting GSM/EDGE, WCDMA/HSPA and LTE. Note that it is not strictly necessary to utilize the same RBS and PA to perform re-farming between for example LTE and HSPA, especially if it is done on a very static and slow basis.

A problem with existing solutions such as re-farming is that they are static and not based on the current traffic situation. For instance, in a migration scenario, the number of terminals only supporting legacy RATs such as GSM/HSPA, might be large compared to terminals supporting both new RATs, such as LTE, and legacy RATs such as GSM/HSPA, giving indications to allocate a large part of the radio spectrum to the legacy RAT; GSM/HSPA, and less to the new RAT; LTE. Then, the LTE terminals might not be able to utilize their full data rate potential, due to only a small bandwidth, e.g. 5MHz, allocated to LTE instead of the full bandwidth, e.g. 10 MHz. This will be the case also when the actual number of active HSPA terminals connected to a specific cell is small. Hence static solutions will affect the data rate and may thus reduce user experience for new terminals and/or modems supporting new RATs such as LTE.

A further problem with existing re-farming solutions is that they are not well-suited for fast reconfiguration of a single RAT, e.g. LTE, from a large system bandwidth to a smaller bandwidth, while maintaining current active terminals and/or modems in active mode and with as small user impact as possible.

EP 2203011 A1 describes a method of allocating bandwidth to two different radio access technologies based on traffic in a radio access technology. WO 2011/134099 A1 describes that a network entity allocates radio resources to network nodes based on network status information received from the network nodes. "An approach for automated spectrum refarming for multiple radio access technologies" IEEE, 24 October 2011, XP032442811 describes that a dynamic spectrum manager (DSM) monitors a status of radio access technologies and sets off alerts according to conditions that impact system performance. WO 2008/081309 A2 describes that a base station allocates a dedicated bandwidth among a first system and a second system. WO 2008/088254 A1 describes a method for dynamic frequency band allocation between radio communication networks.

### SUMMARY

It is therefore an object of embodiments herein to provide a way of improving performance in a radio communications system.

The invention is defined by independent claims 1 and 8. In the following, parts of the description and drawings referring to embodiments which are not covered by the claims are not presented as embodiments of the invention, but as examples useful for understanding the invention.

According to a first aspect of embodiments herein, the object is achieved by a method in a radio network node for controlling usage of Radio Access Technology, RAT, and bandwidth in a radio communication system. The radio communication system comprises the radio network node which is configured to support transmission and reception of one or more signals in a first RAT on a first bandwidth. Further, the radio communication system comprises a plurality of terminals, each of which terminal supports the first RAT.

The radio network node transmits signals associated with the first RAT on the first bandwidth to terminals supporting the first RAT. When traffic load in the first RAT passes a threshold, the radio network node simultaneously transmits signals associated with the first RAT on a second bandwidth to terminals supporting the first RAT and signals associated with the first RAT on the first bandwidth. The second bandwidth is different from the first bandwidth and is partly overlapping the first bandwidth. Then, the radio network node requests one or more terminals connected to the first RAT and using the first bandwidth to perform a handover from the first RAT and the first bandwidth to the second bandwidth of the first RAT. Further, the radio network node stops the transmission of signals associated with the first RAT on the first bandwidth when the one or more terminals connected to the first RAT and the first bandwidth has performed the handover.

According to a second aspect of embodiments herein, the object is achieved by a radio network node for controlling usage of Radio Access Technology, RAT, and bandwidth in a radio communication system. The radio communication system comprises the radio network node which is configured to support transmission and reception of one or more signals in a first RAT on a first bandwidth. Further, the radio communication system comprises a plurality of terminals, each of which terminal supports the first RAT.

The radio network node comprises a transmitting circuit configured to transmit signals associated with the first RAT on the first bandwidth to terminals supporting the first RAT. When traffic load in the first RAT passes a threshold, the transmitting circuit is configured to simultaneously transmit signals associated with the first RAT on a second bandwidth to terminals supporting the first RAT and signals associated with the first RAT on the first bandwidth. The second bandwidth is different from the first bandwidth and is partly overlapping the first bandwidth. Further, the radio network node comprises a requesting circuit configured to request one or more terminals connected to the first RAT and using the first bandwidth to perform a handover from the first RAT and the first bandwidth to the second bandwidth of the first RAT. Further, the radio network node comprises a stopping circuit configured to stop the transmission of signals associated with the first RAT on the first bandwidth when the one or more terminals connected to the first RAT and the first bandwidth has performed the handover.

Since signals associated with the first RAT are transmitted on the second bandwidth to terminals supporting the first RAT, when the traffic load passes a threshold, a more efficient usage of the RAT and bandwidths is achieved. This results in an improved performance in the communications system, since the available RAT and bandwidths are more efficiently used.

An advantage with embodiments herein is that an optimized RAT utilization is made in the radio network node given the system bandwidth resulting in improved system capacity and end user experience.

A further advantage with embodiments herein is that they enable a fast and smooth way to change the bandwidth usage for a RAT.

### BRIEF DESCRIPTION OF THE DRAWINGS

Examples of embodiments herein will be described in more detail with reference to attached drawings in which:
Figure 1 is a schematic block diagram illustrating embodiments in a communications system;
Figure 2 is a flowchart depicting embodiments and examples of a method in a radio network node;
Figure 3 is a schematic block diagram illustrating embodiments of a radio network node; and
Figure 4 is a schematic diagram illustrating embodiments of simultaneous transmission

### DETAILED DESCRIPTION

Embodiments herein will be exemplified in the following non-limiting description. Further, embodiments herein will be described with reference to a RAT such as WCDMA/HSPA and/or LTE, but it should be understood that other RATs may be used. Furthermore, embodiments will be described with reference to one RAT, but it should be understood that embodiments may also comprise two, three or more RATs.

By embodiments herein is provided an adaptation of the usage of the radio spectrum depending on the current traffic and load situation.

Further, by embodiments herein, a smooth reconfiguration of a single RAT with a large system bandwidth to a smaller bandwidth is made, whereby the user experience for connected terminals is improved.

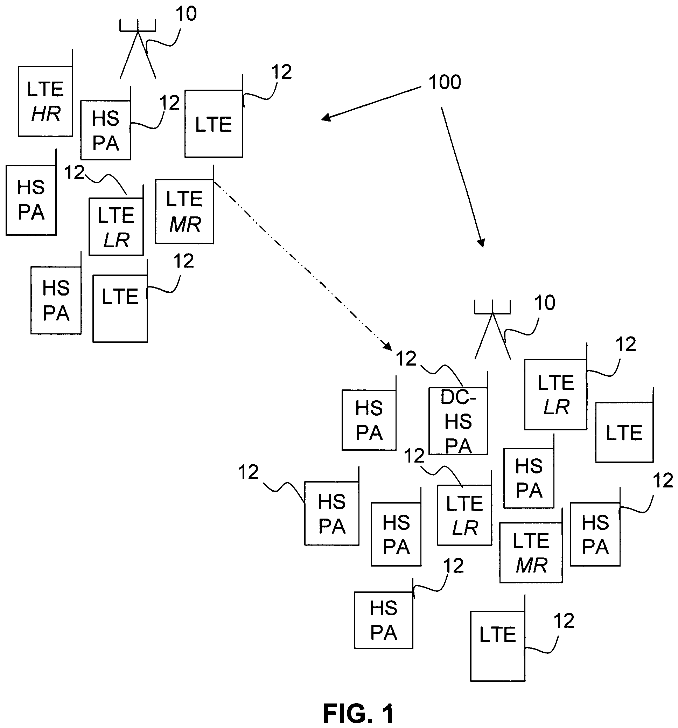

**Fig. 1** is a schematic overview of **a radio communications network 100**, implementing one or more RATs. The radio communications network 100 may be implementing one or more of Long Term Evolution (LTE), LTE-Advanced network, 3rd Generation Partnership Project (3GPP) Wideband Code Division Multiple Access (WCDMA), WCDMA/High-Speed Packet Access (WCDMA/HSPA), System for Mobile communications/Enhanced Data rate for GSM Evolution (GSM/EDGE), Worldwide Interoperability for Microwave Access (WiMax), and/or Ultra Mobile Broadband (UMB), just to mention a few possible implementations. Thus, the communications network 100 may be a multi-RAT communications network.

The communications network 100 comprises **one or more radio network nodes 10**, such as a radio base station, providing radio coverage over at least one geographical area forming a cell (not shown).

The radio network node 10, may also be referred to as e.g. a NodeB, an evolved Node B (eNB, eNode B), a Radio Base Station (RBS), a base transceiver station, Access Point Base Station, base station router, or any other network unit capable to communicate with a terminal 12 within the cell depending e.g. of the RAT and terminology used. Also, the radio network node 10 may further serve one or more cells and the radio network node 10 serving the terminal 12 may further be exemplified as a relay node or a beacon node.

Further, the radio network node 10 is configured to support transmission and reception of signals in a first RAT. The radio network node 10 may further be configured to support transmission and reception of signals in one or more second RATs. The radio network node 10 may support one or more of LTE, HSPA, and Dual Carrier (DC)-HSPA.

The radio network node 10 transmits and receives signals, such as broadcast signals, control signals, data signals, and/or pilot signals according to well defined principles and standards for the respective RAT and will therefore not be described in more detail here.

**One or more terminals 12** are served in the cell by the radio network node 10 and is communicating with the radio network node 10. The terminal 12 transmits data over a radio interface to the radio network node 10 in an uplink (UL) transmission and the network node 10 transmits data to the user equipment 12 in a downlink (DL) transmission.

It should be understood that the term "terminal" is a non-limiting term which means any wireless terminal, user equipment, device or node e.g. Personal Digital Assistant (PDA), laptop, mobile phone, sensor, modem, or relay. The terminal may be any device configured to communicate in the communication network. The terminal may also be capable and not capable of performing inter-frequency measurements without gaps.

Further, the one or more terminals 12 are configured to support only the first RAT, or only the second RAT or both RATs, as well as dual cell, multi-carrier, operation within one or both RATs. As schematically shown in Fig. 1, the terminals 12 may support one or more of LTE, HSPA, and Dual Carrier (DC)-HSPA.

In some embodiments, the terminals operating in LTE uses services requiring low rate, such as speech services. Such terminals are herein referred to as LTE Low Rate (LTE-LR) terminals. Further, in some embodiments, the terminals operating in LTE uses services requiring medium rate, such as streaming. Such terminals are herein referred to as LTE Medium Rate (LTE-MR) terminals. Furthermore, in some embodiments, the terminals operating in LTE uses services requiring high rate, such as data transfer. Such terminals are herein referred to as LTE High Rate (LTE-HR) terminals.

The capabilities of the one or more terminals 12 are known to the radio network node 10 via signalling to the radio network node 10 according to well defined principles and standards and will therefore not be described in more detail here.

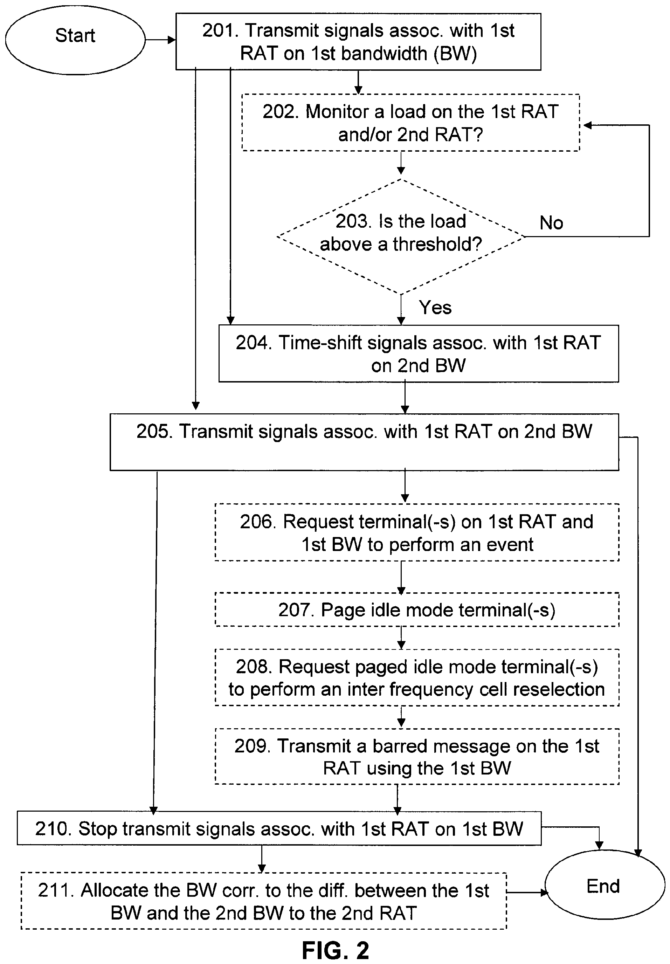

**Figure 2** is **a flowchart depicting embodiments** and examples **of a method** in the radio network node 10 for controlling usage of RAT and bandwidth in the radio communications system 100. As previously described, the radio communications system 100 comprises the radio network node 10 configured to support transmission and reception of signals in a first RAT and in a possible second RAT. The signal associated with the respective first or second RAT may be a synchronization signal, a pilot signal, a broadcast signal, a broadcast message signal, a control channel information signal, cell reference symbols and/or a data signal.

Further, the radio communications system 100 may comprise a plurality of terminals 12. Each terminal 12 may be configured to support only the first RAT, only the second RAT or both RATs.

Actions for controlling usage of RAT and bandwidth in the radio communications system 100 will now be described with reference to Figure 2.

### Action 201

The radio network node 10 transmits signals associated with the first RAT on the first bandwidth to one or more terminals 12 supporting the first RAT. As previously mentioned, the signals may be synchronization signals, and/or pilot signals, and/or broadcast signals, and/or broadcast message signals, and/or control channel information signals and/or data signals.

### Action 202

In order to determine the traffic situation in the first RAT and/or in the second RAT, the radio network node 10 may monitor the load, e.g. the traffic load, in the first RAT and/or in a second RAT.

The load in the first RAT and/or the second RAT may be an UL/DL total bit rate load, e.g. an UL/DL total bite rate load per time unit, an UL/DL code allocation load, an UL/DL resource element load, e.g. an UL/DL hardware usage load, an UL/DL resource block allocation load, an UL interference level load, an UL/DL transmit power usage load, an UL/DL time-slot usage load, and/or an UL/DL total buffer level load, i.e. load based on data buffered at the transmitting circuit but not yet transmitted.

### Action 203

In some embodiments and examples, the radio network node 10 decides whether or not the bandwidth of the first RAT has to be reconfigured.

As mentioned in action 202, the radio network node 10 may monitor the load in the first RAT and/or in a second RAT. If the load is above a threshold, the radio network node 10 may decide that a reconfiguration of bandwidth of the first RAT has to be performed. The threshold may be a predefined or preset threshold value stored in a memory comprised in the radio network node 10 or connected to the radio network node 10. However, the threshold may also be a parameter decided by another node such as a Radio Network Controller (RNC) or a core network.

The radio network node 10 may further monitor the load in a second RAT, e.g. HSPA, using e.g. a third bandwidth. The radio network node 10 may then decide whether or not the second RAT needs more system bandwidth by comparing the load of the second RAT with the threshold. If the load in the second RAT exceeds the threshold, the radio network node 10 may decide to reduce the bandwidth of the first RAT, e.g. LTE, from a large bandwidth of e.g. 10 MHz to a small bandwidth of e.g. 5 MHz. Further, as will be described in action 211 below, the difference between the bandwidth of the first RAT before the bandwidth reduction and the bandwidth of the first RAT after the bandwidth reduction may be allocated to the second RAT, e.g. HSPA, in order to give the second RAT more system bandwidth as needed. In the example give above, the bandwidth of the first RAT before the bandwidth reduction was 10 MHz and the bandwidth of the first RAT after the bandwidth reduction was 5 MHz. Thus, the difference is 5 MHz and this bandwidth may be allocated to the second RAT in addition to the already used third bandwidth.

In some embodiments and examples and as long as the loads are acceptable for the current RAT(-s) and bandwidth allocation, the monitoring continues.

### Action 204

In some embodiments and examples, the radio network node 10 time-shifts signals associated with the first RAT on the second bandwidth in relation to signals associated with the first RAT on the first bandwidth, whereby interference is reduced and allocated power is distributed.

By time-shifting signals on the first and second bandwidths, the interference they cause on e.g. pilot signals, synchronization signals, and/or broadcast signals etc., may be reduced. Another reason for performing time-shifting is to distribute the available power allocated to signals associated with the first RAT and/or second RAT so that all signals can be transmitted with sufficient power.

If for example, the radio network node 10 has a total max power of 20 W and two cells need to share the max power between them they can each only be allocated 10 W if they are time aligned and are transmitting all resource elements in one OFDM symbol. However, by time shifting, and not using all resource elements, radio network node 10 may be able to allocate up to 20 W per cell.

The radio network node 10 may perform the time-shifting of the signals by means of one or more time-shifting or multiplexing symbol, such as one or more Orthogonal Frequency-Division Multiplexing (OFDM) symbols.

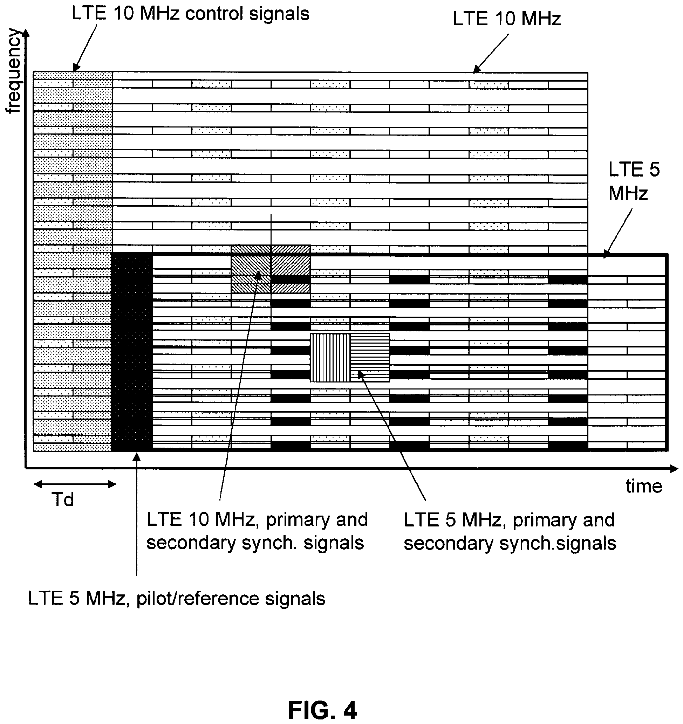

As illustrated in **Figure 4** schematically showing **a diagram showing embodiments of simultaneous transmission,** signals transmitted on the second bandwidth, e.g. the 5 MHz bandwidth, have been time-shifted in relation to signals transmitted on the first bandwidth, e.g. the 10 MHz bandwidth resulting in a time difference T_{d} between the signals. Thereby, a collision between the transmission of e.g. the Packet Data Control Channel (PDCCH) on the 10 MHz bandwidth and transmission of the PDCCH and a reference signal (RS) on the 5 MHz bandwidth may be avoided.

### Action 205

When the load on the first RAT and/or the second RAT passes the threshold, i.e. exceeds the threshold, the traffic in the RAT for which the load exceeds the threshold is high. Therefore, the radio network node 10 transmits signals associated with the first RAT on a second bandwidth to the one or more terminals 12 supporting the first RAT in order to provide an efficient usage of the RAT and bandwidths. The second bandwidth should be different from the first bandwidth and should be partly overlapping the first bandwidth in order to free up spectrum to the second RAT and/or in order to reduce the power consumption of the radio network node 10 in low load scenarios.

Further, the radio network node 10 may simultaneously transmit signals associated with the first RAT on the second bandwidth and signals associated with the first RAT on the first bandwidth.

### Action 206

In order to reduce the traffic in the first RAT first bandwidth, the radio network node 10 may request one or more terminals 12 connected to the first RAT and using the first bandwidth to perform an event. The event may be a handover, e.g. an inter-frequency handover, from the first RAT first bandwidth to the first RAT second bandwidth.

### Action 207

In order to determine whether or not one or more terminals 12 being in idle mode is camping on the first RAT first bandwidth, the radio network node 10 may page the one or more terminals 12 being in idle mode and being camping on the first RAT first bandwidth.

### Action 208

Thereafter, the radio network node 10 may request the paged one or more terminals 12 being in idle mode to perform an inter-frequency cell reselection. The terminal 12 being in idle mode may then perform an inter-frequency cell reselection from the first RAT first bandwidth to the first RAT second bandwidth. Thereby, when the terminal 12 being in idle mode becomes active it will be using the first RAT second bandwidth and not the first RAT first bandwidth.

### Action 209

Then, the radio network node 10 may transmit a barred message on a broadcast channel on the first RAT using the first bandwidth. The barred message will inform the terminals 12 that they are not allowed to camp on the first RAT using the first bandwidth.

### Action 210

The radio network node 10 stops the transmission of signals associated with the first RAT on the first bandwidth.

In some embodiments and examples, the radio network node 10 stops the transmission of signals associated with the first RAT on the first bandwidth when the one or more terminals 12 connected to the first RAT and first bandwidth has performed the event. Thus, the radio network node 10 may stop the transmission when it has received a handover complete message sent from the terminal 12 on the first RAT using the second bandwidth indicating that the terminal 12 is connected to the new cell.

Further, the radio network node 10 may stop the transmission of signals associated with the first RAT on the first bandwidth when a period of time is larger than a timer threshold. The timer threshold may be associated with a transition time which may be a time interval from the point of time of transmittal of a handover request to the point of time when all, or at least a majority, of the connected terminals 12 have finalized and confirmed handover. Thereby, signals may be transmitted simultaneously on the first RAT using the first bandwidth and on the first RAT using the second bandwidth until all, or at least a majority of the connected terminals 12 have finalized the handover.

### Action 211

The radio network node 10 may allocate a bandwidth corresponding to the difference between the first bandwidth and the second bandwidth to a second RAT. As described under action 203 above, this may be advantageous when a second RAT, e.g. HSPA, using e.g. a third bandwidth needs more system bandwidth whereby the second RAT may be allocated the difference between the first bandwidth and the second bandwidth in addition the third bandwidth.

To summarize, according to the invention, the transmission of signals is enabled for the first RAT, e.g. LTE, using the second bandwidth, before disabling transmission of similar signals and/or information from the first RAT using the first bandwidth. Thus, the signals on the first RAT second bandwidth are transmitted simultaneously with signals on the first RAT first bandwidth. As previously mentioned in relation to action 204, the transmitted signals can be time-shifted, whereby interference on pilot signals etc may be reduced. Further, the radio network node 10 requests terminals 12 connected to the first RAT using the first bandwidth to perform an inter-frequency handover to the first RAT using the second bandwidth. Furthermore, the radio network node 10 may page idle mode terminals 12 and request them to perform cell reselection. Thereafter, the radio network node 10 may set the first RAT with the first bandwidth to "Barred", whereby no new terminals 12 may be camping on this cell. When a period of time passes a threshold value and/or when all connected terminals 12 have reported handover completed to the radio network node 10, the radio network node 10 may disable the first RAT using the first bandwidth.

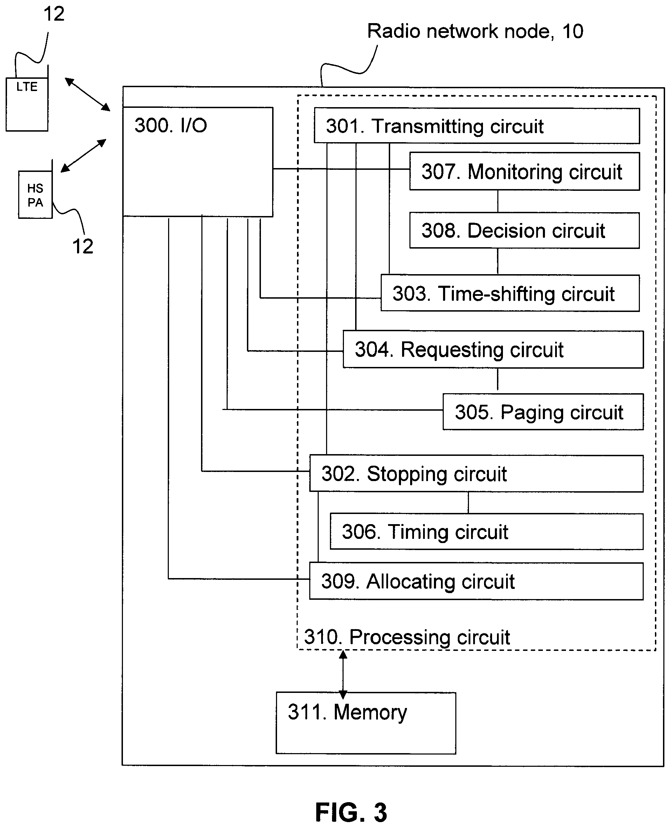

To perform the method actions in the radio network node 10 described above, the radio network node 10 comprises an arrangement depicted in **Figure 3**. As mentioned above, the radio network node 10 is comprised in the radio communication system 100. The radio network node 10 is further configured to support transmission and reception of signals in the first RAT and possible also in one or more second RATs. The signal associated with the respective first or second RAT may be a synchronization signal, a pilot signal, a broadcast signal, a common control channel signal, cell reference symbols, etc.

Further, the radio communication system 100 may comprise a plurality of terminals 12. Each terminal 12 may be configured to support the first RAT. However, one or more terminals 12 may support one or more second RATs or a combination of the first RAT and one or more of the one or more second RATs. The radio network node 10 is configured to control usage of Radio Access Technology, RAT, and frequency bandwidth in the radio communication system 100.

The radio network node 10 may comprise an **input and output port 300** configured to function as an interface for communication between the radio network node 10 and one or more terminals 12.

The radio network node 10 comprises a **transmitting circuit 301** configured to transmit signals associated with the first RAT on the first bandwidth to terminals supporting the first RAT. The transmitting circuit 301 may transmit signals over the input and outlet port 300.

The transmitting circuit 301 is configured to transmit signals associated with the first RAT on a second bandwidth to terminals 12 supporting the first RAT, when the load, i.e. the traffic load, passes a threshold. The second bandwidth is different from the first bandwidth and it is partly overlapping the first bandwidth.

The transmitting circuit 301 is further configured to simultaneously transmit signals associated with the first RAT on a second bandwidth and signals associated with the first RAT on the first bandwidth.

In some embodiments, the transmitting circuit 301 is further configured to transmit a barred message on a broadcast channel on the first RAT using the first bandwidth to prevent one or more new terminals 12 to camp on the first RAT using the first bandwidth.

The radio network node 10 comprises further a **stopping circuit 302** configured to stop the transmission of signals associated with the first RAT on the first bandwidth.

According to the invention, the stopping circuit 302 is configured to stop the transmission of signals associated with the first RAT on the first bandwidth when the one or more terminals 12 connected to the first RAT and first bandwidth has performed the event. The event is a handover from the first RAT and first bandwidth to the second bandwidth of the first RAT.

Further, the stopping circuit 302 may be configured to stop the transmission of signals associated with the first RAT on the first bandwidth when a time period is larger than a timer threshold.

In some embodiments, the radio network node 10 further comprises **a time-shifting circuit 303** configured to time-shift signals associated with the first RAT on the second bandwidth in relation to signals associated with the first RAT on the first bandwidth. The time shifting circuit 303 may further be configured to perform the time-shifting by means of one or more time-shifting or multiplexing symbols, such as one or more OFDM symbols.

The radio network node 10 further comprises a **requesting circuit 304** configured to request one or more terminals 12 connected to the first RAT and using the first bandwidth to perform the event.

In some embodiments, the radio network node 10 further comprises **a paging circuit 305** configured to page one or more idle mode terminals 12. In such embodiments, the requesting circuit 304 is configured to request the paged one or more idle mode terminals 12 to perform an inter frequency cell reselection.

The radio network node 10 may further comprise **a timing circuit 306**, which may be configured to indicate when a time period is larger than a timer threshold.

The timer threshold may be associated with the time it takes for the paged one or more idle mode terminals 12 to perform the inter-frequency cell reselection to the second bandwidth. In some embodiments, the timer threshold may be associated with a transition time which may be a time interval from the time of transmittal of a handover request to the time when all, or at least a majority, of the connected terminals 12 have finalized and confirmed handover.

In some embodiments, the radio network node 10 comprises further a **monitoring circuit 307** configured to monitor load in the first RAT. The load in the first RAT and/or the second RAT may be an UL/DL total bit rate load, e.g. an UL/DL total bite rate load per time unit, an UL/DL code allocation load, an UL/DL resource element load, e.g. an UL/DL hardware usage load, an UL/DL resource block allocation load, an UL interference level load, an UL/DL transmit power usage load, an UL/DL time-slot usage load, and/or an UL/DL total buffer level load, i.e. load based on data buffered at the transmitting circuit but not yet transmitted.

Further, the radio network node 10 may comprise a **decision circuit 308** configured to decide whether or not the bandwidth of the first RAT has to be reconfigured. The decision circuit 308 may decide whether or not the bandwidth of the first RAT has to be reconfigured by comparing the load with a threshold. If the load is above the threshold, the decision circuit 308 may decide that a reconfiguration of bandwidth of the first RAT has to be performed. The threshold may be a predefined or preset threshold value stored in a memory. However, the threshold may also be a parameter decided by another node such as the RNC or the core network.

The radio network node 10 may further comprise an **allocating circuit 309** which may be configured to allocate the bandwidth corresponding to the difference between the first bandwidth and the second bandwidth to a second RAT.

Embodiments herein for controlling usage of RAT and bandwidth in a radio communications system may be implemented through one or more processors, e.g. microprocessor, such as **a processing circuit 310** comprised in the radio network node 10 depicted in Fig. 3, together with computer program code for performing the functions and/or method actions of embodiments herein.

The radio network node 10 may further comprise **a memory 311**. The memory may comprise one or more memory units and may be used to store for example data and/or information such as data and/or information relating to RATs, frequency bandwidths, and thresholds.

When using the word "comprise" or "comprising" it shall be interpreted as non-limiting, in the meaning of "consist at least of".

The scope of the invention is defined by the appending claims.

## Claims

1. A method in a radio network node (10) for controlling usage of Radio Access Technology, RAT, and bandwidth in a radio communication system (100), wherein the radio communication system (100) comprises the radio network node (10) configured to support transmission and reception of one or more signals in a first RAT on a first bandwidth, wherein the radio communication system (100) further comprises a plurality of terminals (12), and wherein each terminal (12) supports the first RAT, the method comprises:
- transmitting (201) signals associated with the first RAT on the first bandwidth; and
- when a traffic load in the first RAT passes a threshold,
- simultaneously transmitting (205) signals associated with the first RAT on a second bandwidth and signals associated with the first RAT on the first bandwidth, wherein the second bandwidth is different from the first bandwidth and wherein the second bandwidth is partly overlapping the first bandwidth;
- requesting (206) one or more terminals (12) connected to the first RAT and using the first bandwidth to perform a handover from the first RAT and the first bandwidth to the second bandwidth of the first RAT; and
- stopping (210) transmission of signals associated with the first RAT on the first bandwidth when the one or more terminals (12) connected to the first RAT and the first bandwidth has performed the handover.

2. The method of claim 1, further comprising:
- time-shifting (204) signals associated with the first RAT on the second bandwidth in relation to signals associated with the first RAT on the first bandwidth, wherein the time-shifting is performed by means of one or more orthogonal frequency division multiplexing, OFDM, symbols.

3. The method of any one of claim 1-2, further comprising:
- paging (207) idle mode terminals (12); and
- requesting (208) the paged idle mode terminals (12) to perform an inter frequency cell reselection, and wherein stopping (210) the transmission of signals associated with the first RAT on the first bandwidth further comprises:
- stopping the transmission when a timer is larger than a threshold value, and wherein the threshold value is associated with the time it takes for the paged idle mode terminals to perform the inter-frequency cell reselection to the second bandwidth.

4. The method of claim 3, further comprising:
- transmitting (209) a barred message on a broadcast channel on the first RAT using the first bandwidth, wherein the barred message informs one or more new terminals (12) not to camp on the first RAT using the first bandwidth.

5. The method of any one of claims 1-4, wherein the one or more signals is a pilot signal, or a synchronisation signal, or a broadcast message signal, or a control channel information signal.

6. The method of any one of claims 1-5, further comprising:
- monitoring (202) traffic load in the first RAT; and
- deciding (203) whether or not the first bandwidth of the first RAT has to be reconfigured.

7. The method of any one of claims 1-6, further comprising:
- allocating (211) the bandwidth corresponding to the difference between the first bandwidth and the second bandwidth insofar as it partly overlaps the first bandwidth to a second RAT.

8. A radio network node (10) for controlling usage of Radio Access Technology, RAT, and bandwidth in a radio communication system (100), wherein the radio communication system (100) comprises the radio network node (10) configured to support transmission and reception of one or more signals in a first RAT on a first bandwidth, wherein the radio communication system (100) further comprises a plurality of terminals (12), and wherein each terminal (12) supports the first RAT, the radio network node (10) comprises:
- a transmitting circuit (301) configured to transmit signals associated with the first RAT on the first bandwidth; and wherein the transmitting circuit (301) is configured to simultaneously transmit signals associated with the first RAT on a second bandwidth and signals associated with the first RAT on the first bandwidth, when a traffic load in the first RAT passes a threshold, and wherein the second bandwidth is different from the first bandwidth and wherein the second bandwidth is partly overlapping the first bandwidth; the radio
network node (10) comprises further:
- a requesting circuit (304) configured to request one or more terminals (12) connected to the first RAT and using the first bandwidth to perform a handover from the first RAT and the first bandwidth to the second bandwidth of the first RAT; and
- a stopping circuit (302) configured to stop the transmission of signals associated with the first RAT on the first bandwidth, when the traffic load passes the threshold when the one or more terminals (12) connected to the first RAT and the first bandwidth has performed the handover.

9. The radio network node (10) of claim 8, further comprising:
- a time-shifting circuit (303) configured to time shift signals associated with the first RAT on the second bandwidth in relation to signals associated with the first RAT on the first bandwidth, and wherein the time-shifting circuit (303) is configured to perform the time-shifting by means of one or more orthogonal frequency division multiplexing, OFDM, symbols.

10. The radio network node (10) of any one of claim 8-9, further comprising:
- a paging circuit (305) configured to page one or more terminals (12) being in idle mode; wherein
- the requesting circuit (304) is configured to request the one or more terminals (12) being in idle mode to perform an inter frequency cell reselection, wherein the radio network node (10) further comprises:
- a timing circuit (306) configured to indicate when a time period is larger than a timer threshold value, wherein the stopping circuit (302) is configured to stop the transmission of signals associated with the first RAT on the first bandwidth when the time period is larger than the timer threshold value, and wherein the timer threshold value is associated with the time it takes for the one or more terminals (12) being in idle mode to perform the inter frequency cell reselection to the second bandwidth.

11. The radio network node (10) of claim 10, wherein the transmitting circuit (301) is configured to transmit a barred message on a broadcast channel on the first RAT using the first bandwidth, wherein the barred message informs one or more new terminals (12) not to camp on the first RAT using the first bandwidth.

12. The radio network node (10) of any one of claims 8-11, wherein the one or more signals is a pilot signal, or a synchronisation signal, or a broadcast message signal, or a control channel information signal.

13. The radio network node (10) of any one of claims 8-12, further comprising:
- a monitoring circuit (307) configured to monitor traffic load in the first RAT; and
- a decision circuit (308) configured to decide whether or not the first bandwidth of the first RAT has to be reconfigured.

14. The radio network node (10) of any one of claims 8-13, further comprising:
- an allocating circuit (309) configured to allocate the bandwidth corresponding to the difference between the first bandwidth and the second bandwidth insofar as it partly overlaps the first bandwidth to a second RAT.

## Patentansprüche

1. Verfahren in einem Funknetzwerkknoten (10) zum Steuern der Ausnutzung einer Funkzugangstechnik, RAT, und einer Bandbreite in einem Funkkommunikationssystem (100), wobei das Funkkommunikationssystem (100) den Funknetzwerkknoten (10) umfasst, der dazu ausgelegt ist, die Übertragung und den Empfang eines oder mehrerer Signale bei einer ersten RAT auf einer ersten Bandbreite zu unterstützen, wobei das Funkkommunikationssystem (100) ferner mehrere Endgeräte (12) umfasst und wobei jedes Endgerät (12) die erste RAT unterstützt, wobei das Verfahren umfasst:
- Übertragen (201) von Signalen, die der ersten RAT auf der ersten Bandbreite zugeordnet sind; und
- wenn eine Verkehrslast bei der ersten RAT einen Schwellenwert überschreitet,
- gleichzeitiges Übertragen (205) von Signalen, die der ersten RAT auf einer zweiten Bandbreite zugeordnet sind, und Signalen, die der ersten RAT auf der ersten Bandbreite zugeordnet sind, wobei sich die zweite Bandbreite von der ersten Bandbreite unterscheidet und wobei sich die zweite Bandbreite teilweise mit der ersten Bandbreite überlappt;
- Auffordern (206) eines oder mehrerer Endgeräte (12), die mit der ersten RAT verbunden sind und die erste Bandbreite verwenden, eine Verbindungsübergabe von der ersten RAT und der ersten Bandbreite an die zweite Bandbreite der ersten RAT durchzuführen; und
- Stoppen (210) der Übertragung von Signalen, die der ersten RAT auf der ersten Bandbreite zugeordnet sind, wenn das eine oder die mehreren Endgeräte (12), die mit der ersten RAT und der ersten Bandbreite verbunden sind, die Verbindungsübergabe durchgeführt haben.

2. Verfahren nach Anspruch 1, ferner umfassend:
- Zeitversetzen (204) von Signalen, die der ersten RAT auf der zweiten Bandbreite zugeordnet sind, im Verhältnis zu Signalen, die der ersten RAT auf der ersten Bandbreite zugeordnet sind, wobei das Zeitversetzen mittels eines oder mehrerer Symbole eines orthogonalen Frequenzmultiplexverfahrens, OFDM, durchgeführt wird.

3. Verfahren nach einem der Ansprüche 1-2, ferner umfassend:
- Rufen (207) von Endgeräten (12) im Ruhemodus; und
- Auffordern (208) der gerufenen Endgeräte (12) im Ruhemodus, eine Zwischenfrequenz-Zellenneuauswahl durchzuführen, und wobei das Stoppen (210) der Übertragung von Signalen, die der ersten RAT auf der ersten Bandbreite zugeordnet sind, ferner umfasst:
- Stoppen der Übertragung, wenn ein Zeitgeber größer als ein Schwellenwert ist, und wobei der Schwellenwert der Zeit zugeordnet ist, welche die gerufenen Endgeräte im Ruhemodus benötigen, um die Zwischenfrequenz-Zellenneuauswahl zu der zweiten Bandbreite durchzuführen.

4. Verfahren nach Anspruch 3, ferner umfassend:
- Übertragen (209) einer Sperrnachricht auf einem Rundrufkanal mit der ersten RAT unter Verwendung der ersten Bandbreite, wobei die Sperrnachricht ein oder mehrere neue Endgeräte (12) darüber informiert, nicht auf der ersten RAT unter Verwendung der ersten Bandbreite zu kampieren.

5. Verfahren nach einem der Ansprüche 1-4, wobei es sich bei dem einen oder den mehreren Signalen um ein Pilotsignal oder ein Synchronisierungssignal oder ein Rundrufnachrichtensignal oder ein Steuerkanalinformationssignal handelt.

6. Verfahren nach einem der Ansprüche 1-5, ferner umfassend:
- Überwachen (202) der Verkehrslast bei der ersten RAT; und
- Entscheiden (203), ob die erste Bandbreite der ersten RAT rekonfiguriert werden muss oder nicht.

7. Verfahren nach einem der Ansprüche 1-6, ferner umfassend:
- Zuweisen (211) der Bandbreite, die der Differenz zwischen der ersten Bandbreite und der zweiten Bandbreite entspricht, insofern sie sich teilweise mit der ersten Bandbreite überlappt, an eine zweite RAT.

8. Funknetzwerkknoten (10) zum Steuern der Ausnutzung einer Funkzugangstechnik, RAT, und einer Bandbreite in einem Funkkommunikationssystem (100), wobei das Funkkommunikationssystem (100) den Funknetzwerkknoten (10) umfasst, der dazu ausgelegt ist, die Übertragung und den Empfang eines oder mehrerer Signale bei einer ersten RAT auf einer ersten Bandbreite zu unterstützen, wobei das Funkkommunikationssystem (100) ferner mehrere Endgeräte (12) umfasst und wobei jedes Endgerät (12) die erste RAT unterstützt, wobei der Funknetzwerkknoten (10) umfasst:
- eine Übertragungsschaltung (301), die dazu ausgelegt ist, Signale, die der ersten RAT auf der ersten Bandbreite zugeordnet sind, zu übertragen; und wobei die Übertragungsschaltung (301) dazu ausgelegt ist, gleichzeitig Signale, die der ersten RAT auf einer zweiten Bandbreite zugeordnet sind, und Signale, die der ersten RAT auf der ersten Bandbreite zugeordnet sind, zu übertragen, wenn eine Verkehrslast bei der ersten RAT einen Schwellenwert überschreitet, und wobei sich die zweite Bandbreite von der ersten Bandbreite unterscheidet und wobei sich die zweite Bandbreite teilweise mit der ersten Bandbreite überlappt; wobei der Funknetzwerkknoten (10) ferner umfasst:
- eine Aufforderungsschaltung (304), die dazu ausgelegt ist, ein oder mehrere Endgeräte (12), die mit der ersten RAT verbunden sind und die erste Bandbreite verwenden, dazu aufzufordern, eine Verbindungsübergabe von der ersten RAT und der ersten Bandbreite an die zweite Bandbreite der ersten RAT durchzuführen; und
- eine Stoppschaltung (302), die dazu ausgelegt ist, die Übertragung von Signalen, die der ersten RAT auf der ersten Bandbreite zugeordnet sind, zu stoppen, wenn die Verkehrslast den Schwellenwert überschreitet, wenn das ein oder die mehreren Endgeräte (12), die mit der ersten RAT und der ersten Bandbreite verbunden sind, die Verbindungsübergabe durchgeführt haben.

9. Funknetzwerkknoten (10) nach Anspruch 8, ferner umfassend:
- eine Zeitversatzschaltung (303), die dazu ausgelegt ist, Signale, die der ersten RAT auf der zweiten Bandbreite zugeordnet sind, im Verhältnis zu Signalen, die der ersten RAT auf der ersten Bandbreite zugeordnet sind, zeitlich zu versetzen, und wobei die Zeitversatzschaltung (303) dazu ausgelegt ist, das Zeitversetzen mittels eines oder mehrerer Symbole eines orthogonalen Frequenzmultiplexverfahrens, OFDM, durchzuführen.

10. Funknetzwerkknoten (10) nach einem der Ansprüche 8-9, ferner umfassend:
- eine Funkrufschaltung (305), die dazu ausgelegt ist, ein oder mehrere Endgeräte (12) zu rufen, die sich im Ruhemodus befinden; wobei
- die Aufforderungsschaltung (304) dazu ausgelegt ist, das eine oder die mehreren Endgeräte (12), die sich im Ruhemodus befinden, dazu aufzufordern, eine Zwischenfrequenz-Zellenneuauswahl durchzuführen, wobei der Funknetzwerkknoten (10) ferner umfasst:
- eine Zeitgeberschaltung (306), die dazu ausgelegt ist, anzuzeigen, wenn ein Zeitraum größer als ein Zeitgeberschwellenwert ist, wobei die Stoppschaltung (302) dazu ausgelegt ist, die Übertragung von Signalen, die der ersten RAT auf der ersten Bandbreite zugeordnet sind, zu stoppen, wenn der Zeitraum größer als der Zeitgeberschwellenwert ist, und wobei der Zeitgeberschwellenwert der Zeit zugeordnet ist, welche das eine oder die mehreren Endgeräte (12), die sich im Ruhemodus befinden, benötigen, um die Zwischenfrequenz-Zellenneuauswahl zu der zweiten Bandbreite durchzuführen.

11. Funknetzwerkknoten (10) nach Anspruch 10, wobei die Übertragungsschaltung (301) dazu ausgelegt ist, eine Sperrnachricht auf einem Funkrufkanal mit der ersten RAT unter Verwendung der ersten Bandbreite zu übertragen, wobei die Sperrnachricht ein oder mehrere neue Endgeräte (12) darüber informiert, nicht auf der ersten RAT unter Verwendung der ersten Bandbreite zu kampieren.

12. Funknetzwerkknoten (10) nach einem der Ansprüche 8-11, wobei es sich bei dem einen oder den mehreren Signalen um ein Pilotsignal oder ein Synchronisierungssignal oder ein Rundrufnachrichtensignal oder ein Steuerkanalinformationssignal handelt.

13. Funknetzwerkknoten (10) nach einem der Ansprüche 8-12, ferner umfassend:
- eine Überwachungsschaltung (307), die dazu ausgelegt ist, eine Verkehrslast bei der ersten RAT zu überwachen; und
- eine Entscheidungsschaltung (308), die dazu ausgelegt ist, zu entscheiden, ob die erste Bandbreite der ersten RAT rekonfiguriert werden muss oder nicht.

14. Funknetzwerkknoten (10) nach einem der Ansprüche 8-13, ferner umfassend:
- eine Zuweisungsschaltung (309), die dazu ausgelegt ist, die Bandbreite, die der Differenz zwischen der ersten Bandbreite und der zweiten Bandbreite entspricht, insofern sie sich teilweise mit der ersten Bandbreite überlappt, einer zweiten RAT zuzuweisen.

## Revendications

1. Procédé dans un nœud de réseau radio (10) pour commander une utilisation de technologie d'accès radio, RAT, et de bande passante dans un système de communication radio (100), dans lequel le système de communication radio (100) comprend le nœud de réseau radio (10) configuré pour supporter la transmission et la réception d'un ou plusieurs signaux dans une première RAT sur une première bande passante, dans lequel le système de communication radio (100) comprend en outre une pluralité de terminaux (12), et dans lequel chaque terminal (12) supporte la première RAT, le procédé comprend :
- la transmission (201) de signaux associés à la première RAT sur la première bande passante ; et
- quand une charge de trafic dans la première RAT dépasse un seuil,
- la transmission simultanée (205) de signaux associés à la première RAT sur une deuxième bande passante et de signaux associés à la première RAT sur la première bande passante, dans lequel la deuxième bande passante est différente de la première bande passante et dans lequel la deuxième bande passante chevauche en partie la première bande passante ;
- la demande (206) aux un ou plusieurs terminaux (12) connectés à la première RAT et utilisant la première bande passante d'effectuer un transfert de la première RAT et la première bande passante à la deuxième bande passante de la première RAT ; et
- l'arrêt (210) de la transmission de signaux associés à la première RAT sur la première bande passante quand les un ou plusieurs terminaux (12) connectés à la première RAT et la première bande passante ont effectué le transfert.

2. Procédé selon la revendication 1, comprenant en outre :
- le décalage de temps (204) de signaux associés à la première RAT sur la deuxième bande passante en relation avec des signaux associés à la première RAT sur la première bande passante, dans lequel le décalage de temps est effectué au moyen d'un ou plusieurs symboles de multiplexage par répartition en fréquence orthogonale, OFDM.

3. Procédé selon l'une quelconque des revendications 1 à 2, comprenant en outre :
- la recherche par radiomessagerie (207) de terminaux en mode inactif (12) ; et
- la demande (208) aux terminaux en mode inactif recherchés par radiomessagerie (12) d'effectuer une resélection de cellule inter-fréquence, et dans lequel l'arrêt (210) de la transmission de signaux associés à la première RAT sur la première bande passante comprend en outre :
- l'arrêt de la transmission quand une minuterie est supérieure à une valeur de seuil, et dans lequel la valeur de seuil est associée au temps pris par les terminaux en mode inactif recherchés par radiomessagerie pour effectuer une resélection de cellule inter-fréquence vers la deuxième bande passante.

4. Procédé selon la revendication 3, comprenant en outre :
- la transmission (209) d'un message bloqué sur un canal de diffusion sur la première RAT en utilisant la première bande passante, dans lequel le message bloqué informe les un ou plusieurs terminaux (12) de ne pas séjourner sur la première RAT en utilisant la première bande passante.

5. Procédé selon l'une quelconque des revendications 1 à 4, dans lequel les un ou plusieurs signaux sont un signal pilote, ou un signal de synchronisation, ou un signal de messagerie de diffusion, ou un signal d'informations de canal de commande.

6. Procédé selon l'une quelconque des revendications 1 à 5, comprenant en outre :
- la surveillance (202) d'une charge de trafic dans la première RAT ; et
- le fait de décider (203) si la première bande passante de la première RAT doit ou non être reconfigurée.

7. Procédé selon l'une quelconque des revendications 1 à 6, comprenant en outre :
- l'allocation (211) de la bande passante correspondant à la différence entre la première bande passante et la deuxième bande passante dans la mesure où elle chevauche en partie la première bande passante à une deuxième RAT.

8. Nœud de réseau radio (10) pour commander une utilisation de technologie d'accès radio, RAT, et de bande passante dans un système de communication radio (100), dans lequel le système de communication radio (100) comprend le nœud de réseau radio (10) configuré pour supporter la transmission et la réception d'un ou plusieurs signaux dans une première RAT sur une première bande passante, dans lequel le système de communication radio (100) comprend en outre une pluralité de terminaux (12), et dans lequel chaque terminal (12) supporte la première RAT, le nœud de réseau radio (10) comprend :
- un circuit de transmission (301) configuré pour transmettre des signaux associés à la première RAT sur la première bande passante ; et dans lequel le circuit de transmission (301) est configuré pour transmettre simultanément des signaux associés à la première RAT sur une deuxième bande passante et des signaux associés à la première RAT sur la première bande passante, quand une charge de trafic dans la première RAT dépasse un seuil, et dans lequel la deuxième bande passante est différente de la première bande passante et dans lequel la deuxième bande passante chevauche en partie la première bande passante ; le nœud de réseau radio (10) comprend en outre :
- un circuit de demande (304) configuré pour demander aux un ou plusieurs terminaux (12) connectés à la première RAT et utilisant la première bande passante d'effectuer un transfert de la première RAT et la première bande passante à la deuxième bande passante de la première RAT ; et
- un circuit d'arrêt (302) configuré pour arrêter la transmission de signaux associés à la première RAT sur la première bande passante, quand la charge de trafic dépasse le seuil quand les un ou plusieurs terminaux (12) connectés à la première RAT et la première bande passante ont effectué le transfert.

9. Nœud de réseau radio (10) selon la revendication 8, comprenant en outre :
- un circuit de décalage de temps (303) configuré pour décaler temporellement des signaux associés à la première RAT sur la deuxième bande passante en relation avec des signaux associés à la première RAT sur la première bande passante, dans lequel le circuit de décalage de temps (303) est configuré pour effectuer le décalage de temps est effectué au moyen d'un ou plusieurs symboles de multiplexage par répartition en fréquence orthogonale, OFDM.

10. Nœud de réseau radio (10) selon l'une quelconque des revendications 8 à 9, comprenant en outre :
- un circuit de radiomessagerie (305) configuré pour rechercher par radiomessagerie un ou plusieurs terminaux (12) qui sont en mode inactif ; dans lequel
- le circuit de demande (304) est configuré pour demander aux un ou plusieurs terminaux (12) qui sont en mode inactif d'effectuer une resélection de cellule inter-fréquence, dans lequel le nœud de réseau radio (10) comprend en outre :
- un circuit de synchronisation (306) configuré pour indiquer quand une période de temps est supérieure à une valeur de seuil de minuterie, dans lequel le circuit d'arrêt (302) est configuré pour arrêter la transmission de signaux associés à la première RAT sur la première bande passante quand la période de temps est supérieure à la valeur de seuil de temporisation, et dans lequel la valeur de seuil de temporisation est associée au temps pris par les un ou plusieurs terminaux (12) qui sont en mode inactif pour effectuer une resélection de cellule inter-fréquence vers la deuxième bande passante.

11. Nœud de réseau radio (10) selon la revendication 10, dans lequel le circuit de transmission (301) est configuré pour transmettre un message bloqué sur un canal de diffusion sur la première RAT en utilisant la première bande passante, dans lequel le message bloqué informe les un ou plusieurs terminaux (12) de ne pas séjourner sur la première RAT en utilisant la première bande passante.

12. Nœud de réseau radio (10) selon l'une quelconque des revendications 8 à 11, dans lequel les un ou plusieurs signaux sont un signal pilote, ou un signal de synchronisation, ou un signal de messagerie de diffusion, ou un signal d'informations de canal de commande.

13. Nœud de réseau radio (10) selon l'une quelconque des revendications 8 à 12, comprenant en outre :
- un circuit de surveillance (307) configuré pour surveiller une charge de trafic dans la première RAT ; et
- un circuit de décision (308) configuré pour décider si la première bande passante de la première RAT doit ou non être reconfigurée.

14. Nœud de réseau radio (10) selon l'une quelconque des revendications 8 à 13, comprenant en outre :
- un circuit d'allocation (309) configuré pour allouer la bande passante correspondant à la différence entre la première bande passante et la deuxième bande passante dans la mesure où elle chevauche en partie la première bande passante à une deuxième RAT.
